# EUROPEAN PATENT SPECIFICATION

(11) **EP 2 876 972 B1**
(45) Date of publication and mention of the grant of the patent: **07.09.2016**
(21) Application number: 12884021.2
(22) Date of filing: 07.09.2012
(51) Int. Cl.: H04L 12/46, H04W 92/10

(54) **AIR INTERFACE TRANSMISSION METHOD AND RELEVANT DEVICE AND SYSTEM**
LUFTSCHNITTSTELLENÜBERTRAGUNGSVERFAHREN SOWIE VORRICHTUNG DAFÜR UND SYSTEM
PROCÉDÉ DE TRANSMISSION D'INTERFACE RADIO ET DISPOSITIF ET SYSTÈME PERTINENTS

(43) Date of publication of application: 27.05.2015
(73) Proprietor: Huawei Technologies Co., Ltd., Longgang District Shenzhen, Guangdong 518129 (CN)
(72) Inventor: YI, Fu, Shenzhen Guangdong 518129 (CN); CAO, Wei, Shenzhen Guangdong 518129 (CN); ZHONG, Yi, Shenzhen Guangdong 518129 (CN)
(74) Representative: Pfenning, Meinig & Partner mbB
(86) International application number: PCT/CN2012/081151
(87) International publication number: WO 2014/036728

(56) References cited:
- EP-A2- 2 490 465
- CN-A- 1 402 470
- CN-A- 1 870 476
- CN-A- 101 047 587
- CN-A- 101 141 375
- US-A1- 2004 185 777
- US-A1- 2011 002 311
- FERNANDO T N C ET AL: "Ethernet frame tunneling over GPRS/EDGE for universal network monitoring", INDUSTRIAL AND INFORMATION SYSTEMS (ICIIS), 2009 INTERNATIONAL CONFERENCE ON, IEEE, PISCATAWAY, NJ, USA, 28 December 2009 (2009-12-28), pages 55-61, XP031647988, ISBN: 978-1-4244-4836-4
- "Bluetooth network encapsulation protocol (BNEP) specification", BLUETOOTH NETWORK ENCAPSULATION PROTOCOL SPECIFICATION, XX, XX, 12 June 2001 (2001-06-12), pages 1-50, XP002958424,

## Description

### TECHNICAL FIELD

This application relates to the field of communication technologies, and in particular, to an air interface transmission method and a related device and system.

### BACKGROUND

In a communications network, two parties of communication may effectively improve transmission performance and transmission reliability through wired transmission. However, wired transmission sometimes possibly cannot be implemented due to a constraint factor such as municipal engineering and an actual environment, so that wireless transmission is generally considered an important component of a mobile network.

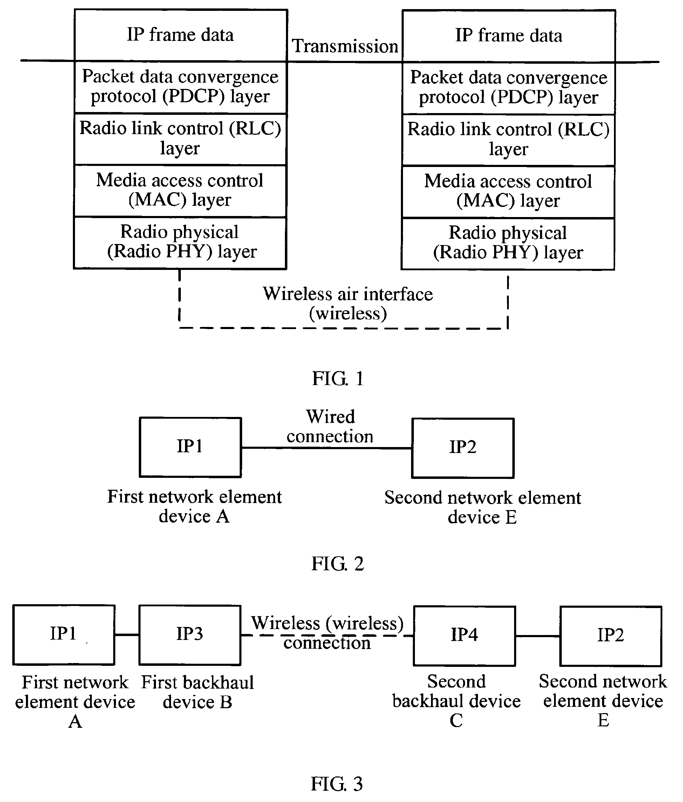

In an actual application, a wireless backhaul device (for example, a base station or an access point) is generally introduced between the two parties of communication of wired transmission, to implement wireless transmission between the two parties of communication. For example, two wireless backhaul devices may be introduced between the two parties of communication of wired transmission, where one wireless backhaul device is wiredly connected to one communication party, the other wireless backhaul device is wiredly connected to the other communication party, and the two wireless backhaul devices are in wireless (wireless) connection, so as to form a wireless air interface connection between the two parties of communication, and enable the two parties of communication to perform wireless transmission. Taking long term evolution (Long Term Evolution, LTE) of the 3rd Generation Partnership Project (The 3rd Generation Partnership Project, 3GPP) as an example, when a wireless backhaul device (for example, a base station or an access point) is introduced between two parties of communication of wired transmission to implement wireless transmission of the two parties of communication, an air interface protocol is shown in FIG. 1, where a radio access layer protocol (Radio Protocol) sequentially includes, from bottom up, a radio physical (Radio PHY) layer, a media access control (Media Access Control, MAC) layer, a radio link control (Radio Link Control, RLC) layer, and a packet data convergence protocol (Packet Data Convergence Protocol, PDCP) layer, and an upper layer of the Radio Protocol carries IP frame data. It can be seen from FIG. 1 that, because the two parties of communication transmit IP frame data through a wireless air interface, IP addresses need to be allocated to the wireless backhaul devices at both sides of the wireless air interface, and network route configuration needs to be modified, which leads to consumption of the IP addresses.

EP 2490464 A2 discusses a WiMAX based system having a base station which communicates to a plurality of customer premises equipment (CPE). The base station obtains and stores information corresponding to the MAC addresses of each of the CPEs. Messages from one CPE can be sent to the base station and then sent to another CPC using the MAC address stored in the base station.

US 2004/0185777 A1 discusses a portable wireless network gateway that aggregates bandwidth demand of different devices operating under different communications protocols. Network connectivity is provided by encapsulating data from the different devices to make the data appear to be data native to a single network. For example, the single network is a cellular wireless network.

### SUMMARY

This application provides an air interface transmission method and a related device and system, which can reduce consumption of IP addresses and do not need to modify network route configuration. The claimed subject-matter is defined by the appended claims.

In a first aspect of this application, an air interface transmission method is provided and includes:
receiving, by a first wireless backhaul device, Ethernet frame data;
encapsulating, by the first wireless backhaul device, the Ethernet frame data by using a radio access layer protocol corresponding to a radio access technology supported by the first wireless backhaul device, to obtain encapsulated Ethernet frame data; and
transmitting, by the first wireless backhaul device, the encapsulated Ethernet frame data to a second wireless backhaul device through a wireless air interface;
the method further comprising before the encapsulating, by the first wireless backhaul device, the Ethernet frame data by using a radio access layer protocol corresponding to a radio access technology supported by the first wireless backhaul device, to obtain encapsulated Ethernet frame data, the method further includes:
parsing, by the first wireless backhaul device, the Ethernet frame data, to obtain a mapping identifier; and
querying, by the first wireless backhaul device according to the mapping identifier, a traffic flow template for a radio bearer resource of a specified QoS class identifier that corresponds to the mapping identifier; and
the transmitting, by the first wireless backhaul device, the encapsulated Ethernet frame data to a second wireless backhaul device through a wireless air interface includes:
transmitting, by the first wireless backhaul device, the encapsulated Ethernet frame data to the second wireless backhaul device through the wireless air interface by using the radio bearer resource of the specified QoS class identifier that corresponds to the mapping identifier.

With reference to the first aspect, in a first possible implementation manner, the querying, by the first wireless backhaul device according to the mapping identifier, a traffic flow template for a radio bearer resource of a specified QoS class identifier that corresponds to the mapping identifier includes:
querying, by the first wireless backhaul device according to the mapping identifier, correspondence between a mapping identifier bound to a traffic flow template and a radio bearer resource of a specified QoS class identifier for the radio bearer resource of the specified QoS class identifier that corresponds to the mapping identifier.

With reference to the first possible implementation manner of the first aspect, in a second possible implementation manner, before the transmitting, by the first wireless backhaul device, the encapsulated Ethernet frame data to the second wireless backhaul device through the wireless air interface by using the radio bearer resource of the specified QoS class identifier that corresponds to the mapping identifier, the method further includes:
performing, by the first wireless backhaul device, header compression processing on the encapsulated Ethernet frame data.

With reference to the first aspect or any one of the first to the second possible implementation manners of the first aspect, in a third possible implementation manner, the radio access layer protocol corresponding to the radio access technology supported by the first wireless backhaul device is the same as a radio access layer protocol corresponding to a radio access technology supported by the second wireless backhaul device.

In a second aspect of this application, an air interface transmission method is provided and includes:
receiving, by a second wireless backhaul device through a wireless air interface, encapsulated Ethernet frame data transmitted by a first wireless backhaul device, where the encapsulated Ethernet frame data is obtained after the first wireless backhaul device receives Ethernet frame data, and encapsulates the Ethernet frame data by using a radio access layer protocol corresponding to a radio access technology supported by the first wireless backhaul device; and
decapsulating, by the second wireless backhaul device, the encapsulated Ethernet frame data by using a radio access layer protocol corresponding to a radio access technology supported by the second wireless backhaul device to obtain the Ethernet frame data, and transmitting the Ethernet frame data to a second network element device wiredly connected to the second wireless backhaul device.

In the first possible implementation manner of the second aspect, the radio access layer protocol corresponding to the radio access technology supported by the first wireless backhaul device is the same as the radio access layer protocol corresponding to the radio access technology supported by the second wireless backhaul device.

With reference to the second aspect or the first possible implementation manner of the second aspect, in a second possible implementation manner, if the encapsulated Ethernet frame data transmitted by the first wireless backhaul device undergoes header compression processing, before the decapsulating, by the second wireless backhaul device, the encapsulated Ethernet frame data by using a radio access layer protocol corresponding to a radio access technology supported by the second wireless backhaul device to obtain the Ethernet frame data, the method further includes:
performing, by the second wireless backhaul device, header decompression processing on the encapsulated Ethernet frame data.

In a third aspect of this application, a computer storage medium is provided, where the computer storage medium stores a program, and when the program runs, all the steps of the air interface transmission method provided in the first aspect of this application are included.

In a fourth aspect of this application, a computer storage medium is provided, where the computer storage medium stores a program, and when the program runs, all the steps of the air interface transmission method provided in the second aspect of this application are included.

In a fifth aspect of this application, a wireless backhaul device is provided and includes:
a receiving unit, configured to receive Ethernet frame data;
an encapsulating unit, configured to encapsulate the Ethernet frame data by using a radio access layer protocol corresponding to a radio access technology supported by the local wireless backhaul device, to obtain encapsulated Ethernet frame data; and
a sending unit, configured to transmit the encapsulated Ethernet frame data to a second wireless backhaul device through a wireless air interface;
the wireless backhaul device provided in the fifth aspect of this application further includes:
a parsing unit, configured to parse the Ethernet frame data, to obtain a mapping identifier; and
a querying unit, configured to query, according to the mapping identifier, a traffic flow template for a radio bearer resource of a specified QoS class identifier that corresponds to the mapping identifier; and
the sending unit is specifically configured to transmit the encapsulated Ethernet frame data to the second wireless backhaul device through the wireless air interface by using the radio bearer resource of the specified QoS class identifier that corresponds to the mapping identifier.

With reference to the fifth aspect, in a first possible implementation manner, the querying unit is specifically configured to query, according to the mapping identifier, correspondence between a mapping identifier bound to a traffic flow template and a radio bearer resource of a specified QoS class identifier for the radio bearer resource of the specified QoS class identifier that corresponds to the mapping identifier.

With reference to the first possible implementation manner of the fifth aspect, in a second possible implementation manner, the wireless backhaul device further includes:
a header compression unit, configured to perform header compression processing on the encapsulated Ethernet frame data obtained by the encapsulating unit, and output the encapsulated Ethernet frame data to the sending unit.

With reference to the fifth aspect or any one of the first to the second possible implementation manners of the fifth aspect, in a fourth possible implementation manner, the radio access layer protocol corresponding to the radio access technology supported by the local wireless backhaul device is the same as a radio access layer protocol corresponding to a radio access technology supported by the second wireless backhaul device.

In a sixth aspect of this application, a wireless backhaul device is provided and includes:
a receiving unit, configured to receive, through a wireless air interface, encapsulated Ethernet frame data transmitted by a first wireless backhaul device, where the encapsulated Ethernet frame data is obtained after the first wireless backhaul device receives Ethernet frame data, and encapsulates the Ethernet frame data by using a radio access layer protocol corresponding to a radio access technology supported by the first wireless backhaul device;
a decapsulating unit, configured to decapsulate the encapsulated Ethernet frame data by using a radio access layer protocol corresponding to a radio access technology supported by the local wireless backhaul device to obtain the Ethernet frame data; and
a sending unit, configured to transmit the Ethernet frame data to a second network element device wiredly connected to the local backhaul device.

In a first possible implementation manner of the sixth aspect, the radio access layer protocol corresponding to the radio access technology supported by the first wireless backhaul device is the same as the radio access layer protocol corresponding to the radio access technology supported by the local wireless backhaul device.

With reference to the sixth aspect or the first possible implementation manner of the sixth aspect, in a second possible implementation manner, if the encapsulated Ethernet frame data transmitted by the first wireless backhaul device undergoes header compression processing, the wireless backhaul device further includes:
a header decompression unit, configured to, before the decapsulating unit decapsulates the encapsulated Ethernet frame data by using a radio access layer protocol corresponding to a radio access technology supported by the local wireless backhaul device to obtain the Ethernet frame data, perform header decompression processing on the encapsulated Ethernet frame data transmitted by the first wireless backhaul device and output the encapsulated Ethernet frame data to the decapsulating unit.

In a seventh aspect of this application, a wireless backhaul device is provided and includes a transmitter, a receiver, a memory, and a processor connected to the transmitter, the receiver, and the memory, where
the memory stores a group of program code, and the processor is configured to invoke the program code stored in the memory, so as to implement the following operations:
receiving Ethernet frame data;
encapsulating the Ethernet frame data by using a radio access layer protocol corresponding to a radio access technology supported by the local wireless backhaul device, to obtain encapsulated Ethernet frame data; and
transmitting the encapsulated Ethernet frame data to a second wireless backhaul device through a wireless air interface.

In a first possible implementation manner of the seventh aspect, before encapsulating the Ethernet frame data by using a radio access layer protocol corresponding to a radio access technology supported by the local wireless backhaul device, to obtain encapsulated Ethernet frame data, the processor further implements the following operations:
parsing the Ethernet frame data, to obtain a mapping identifier; and
querying, according to the mapping identifier, a traffic flow template for a radio bearer resource of a specified QoS class identifier that corresponds to the mapping identifier; and
the transmitting the encapsulated Ethernet frame data to a second wireless backhaul device through a wireless air interface includes:
   transmitting the encapsulated Ethernet frame data to the second wireless backhaul device through the wireless air interface by using the radio bearer resource of the specified QoS class identifier that corresponds to the mapping identifier.

With reference to the first possible implementation manner of the seventh aspect, in a second possible implementation manner, the querying, by the processor according to the mapping identifier, a traffic flow template for a radio bearer resource of a specified QoS class identifier that corresponds to the mapping identifier specifically includes:
querying, by the processor according to the mapping identifier, correspondence between a mapping identifier bound to a traffic flow template and a radio bearer resource of a specified QoS class identifier for the radio bearer resource of the specified QoS class identifier that corresponds to the mapping identifier.

With reference to the second possible implementation manner of the seventh aspect, in a third possible implementation manner, before transmitting the encapsulated Ethernet frame data to the second wireless backhaul device through the wireless air interface connection between the local wireless backhaul device and the second wireless backhaul device by using the radio bearer resource of the specified QoS class identifier that corresponds to the mapping identifier, the processor further implements the following operations:
performing header compression processing on the encapsulated Ethernet frame data.

With reference to the seventh aspect or any one of the first to the third possible implementation manners of the seventh aspect, in a fourth possible implementation manner, the radio access layer protocol corresponding to the radio access technology supported by the local wireless backhaul device is the same as a radio access layer protocol corresponding to a radio access technology supported by the second wireless backhaul device.

In an eighth aspect of this application, a wireless backhaul device is provided and includes a transmitter, a receiver, a memory, and a processor connected to the transmitter, the receiver, and the memory, where
the memory stores a group of program code, and the processor is configured to invoke the program code stored in the memory, so as to implement the following operations:
receiving, through a wireless air interface, encapsulated Ethernet frame data transmitted by a first wireless backhaul device, where the encapsulated Ethernet frame data is obtained after the first wireless backhaul device receives Ethernet frame data, and encapsulates the Ethernet frame data by using a radio access layer protocol corresponding to a radio access technology supported by the first wireless backhaul device; and
decapsulating, by the local wireless backhaul device, the encapsulated Ethernet frame data by using a radio access layer protocol corresponding to a radio access technology supported by the local wireless backhaul device to obtain the Ethernet frame data; and
transmitting the Ethernet frame data to a second network element device wiredly connected to the local backhaul device.

In a first possible implementation manner of the eighth aspect, the radio access layer protocol corresponding to the radio access technology supported by the first wireless backhaul device is the same as the radio access layer protocol corresponding to the radio access technology supported by the local wireless backhaul device.

With reference to the eighth aspect or the first possible implementation manner of the eighth aspect, in a second possible implementation manner, if the encapsulated Ethernet frame data transmitted by the first wireless backhaul device undergoes header compression processing, the processor further implements the following operations:
before decapsulating the encapsulated Ethernet frame data by using a radio access layer protocol corresponding to a radio access technology supported by the local wireless backhaul device to obtain the Ethernet frame data, performing header decompression processing on the encapsulated Ethernet frame data transmitted by the first wireless backhaul device.

In a ninth aspect of this application, an air interface transmission system is provided and includes:
a first wireless backhaul device, a second wireless backhaul device, a first network element device and a second network element device, where the first wireless backhaul device is wiredly connected to the first network element device, the second wireless backhaul device is wiredly connected to the second network element device, and the first wireless backhaul device is connected to the second wireless backhaul device through a wireless air interface;
the first network element device is configured to transmit Ethernet frame data to the first wireless backhaul device;
the first wireless backhaul device is configured to receive the Ethernet frame data transmitted by the first network device, encapsulate the Ethernet frame data transmitted by the first network device by using a radio access layer protocol corresponding to a radio access technology supported by the first wireless backhaul device to obtain the encapsulated Ethernet frame data, and transmit the encapsulated Ethernet frame data to the second wireless backhaul device through a wireless air interface connection with the second wireless backhaul device;
the second wireless backhaul device is configured to receive the encapsulated Ethernet frame data transmitted by the first wireless backhaul device, decapsulate the encapsulated Ethernet frame data by using a radio access layer protocol corresponding to a radio access technology supported by the second wireless backhaul device to obtain the Ethernet frame data, and transmit the Ethernet frame data to the second network element device; and
the second network element device is configured to receive the Ethernet frame data transmitted by the second wireless backhaul device.

In a first possible implementation manner of the ninth aspect, the radio access layer protocol corresponding to the radio access technology supported by the first wireless backhaul device is the same as the radio access layer protocol corresponding to the radio access technology supported by the second wireless backhaul device.

With reference to the ninth aspect or the first possible implementation manner of the ninth aspect, in a second possible implementation manner, the first wireless backhaul device is a macro base station, the second wireless backhaul device is a radio access node, the first network element device is a base station controller or a core network device, and the second network element device is a micro base station.

In this application, the first wireless backhaul device wiredly connected to the first network element device and the second wireless backhaul device wiredly connected to the second network element device are introduced between the first network element device and the second network element device, and the first wireless backhaul device is connected to the second wireless backhaul device through the wireless air interface, so as to implement wireless air interface transmission between the first network element device and the second network element device. Based on this, in this application, the Ethernet frame data is directly transmitted between the first wireless backhaul device and the second wireless backhaul device, so that the introduced first and second wireless backhaul devices located at both sides of the wireless air interface may be considered as "switch" devices based on Ethernet header switching, with no need to introduce new network IP planning, thereby reducing consumption of IP addresses and skipping modifying route configuration of a mobile network.

### BRIEF DESCRIPTION OF DRAWINGS

To describe the technical solutions in the embodiments of the present invention more clearly, the following briefly introduces accompanying drawings required for describing the embodiments. Apparently, the accompanying drawings in the following description show merely some embodiments of the present invention, and a person of ordinary skill in the art may still derive other drawings according to these accompanying drawings without creative efforts.
FIG. 1 is a schematic diagram of an existing 3GPP LTE communication protocol;
FIG 2 is a schematic diagram of a wired connection between a first network element device A and a second network element device E in a communications network;
FIG. 3 is a schematic diagram of a wireless air interface connection between a first network element device A and a second network element device E in a communications network;
FIG 4a is a flow chart of an air interface transmission method provided by an embodiment of this application;
FIG. 4b is a flow chart of another air interface transmission method provided by an embodiment of this application;
FIG. 5 is a schematic diagram of an air interface protocol between a first wireless backhaul device and a second wireless backhaul device provided by this application;
FIG 6 is a schematic diagram of another air interface protocol between a first wireless backhaul device and a second wireless backhaul device provided by this application;
FIG 7 is a flow chart of another air interface transmission method provided by an embodiment of this application;
FIG. 8a is a structural diagram of a wireless backhaul device provided by an embodiment of this application;
FIG 8b is a structural diagram of another wireless backhaul device provided by an embodiment of this application;
FIG 9 is a structural diagram of another wireless backhaul device provided by an embodiment of this application;
FIG 10 is a structural diagram of another wireless backhaul device provided by an embodiment of this application;
FIG 11 is a structural diagram of another wireless backhaul device provided by an embodiments of this application;
FIG 12 is a structural diagram of another wireless backhaul device provided by an embodiment of this application;
FIG 13 is a structural diagram of another wireless backhaul device provided by an embodiment of this application;
FIG 14 is a structural diagram of an air interface transmission system provided by an embodiment of this application;
FIG. 15 is a structural diagram of another air interface transmission system provided by an embodiment of this application; and
FIG. 16 is a schematic diagram of a protocol of the air interface transmission system shown in FIG. 15.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

To better understand an air interface transmission method and a related device and system provided by this application, before detailed description of the air interface transmission method and the related device and system provided by this application, an application scenario of this application is first described clearly, and through the clear description of the application scenario of this application, a person of ordinary skill may have deeper understanding on advantages of the air interface transmission method and the related device and system provided by this application.

Referring to FIG. 2, FIG. 2 is a schematic diagram of wired connection between a first network element device A and a second network element device E in a communications network, where IP1 and IP2 are IP addresses of the first network element device A and the second network element device E, respectively, in communication. Because the wired transmission between the first network element device A and the second network element device E sometimes possibly cannot be implemented due to a constraint factor such as municipal engineering and an actual environment, a first wireless backhaul device B and a second wireless backhaul device C may be introduced between the first network element device A and the second network element device E, as shown in FIG. 3, where the first network element device A is wiredly connected to the first wireless backhaul device B, the second network element device E is wiredly connected to the second wireless backhaul device C, and the first wireless backhaul device B is in wireless (wireless) connection with the second wireless backhaul device C, so as to form a wireless air interface connection between the first network element device A and the second network element device E, and implement wireless transmission between the first network element device A and the second network element device E. However, a wireless air interface protocol stack shown in FIG. 1 is adopted between the first wireless backhaul device B and the second wireless backhaul device C, that is, IP frame data is transmitted through a wireless air interface between the first wireless backhaul device B and the second wireless backhaul device C, so IP addresses IP3 and IP4 need to be allocated for the first wireless backhaul device B and the second wireless backhaul device C, respectively, which not only consumes IP addresses but also needs to modify network route configuration.

To solve the foregoing defect, embodiments of this application provide an air interface transmission method and a related device and system, which can reduce consumption of IP addresses and do not need to modify network route configuration. In the air interface transmission method provided by the embodiment of this application, a first wireless backhaul device receives Ethernet frame data, encapsulates the Ethernet frame data by using a radio access layer protocol corresponding to a radio access technology supported by the first wireless backhaul device to obtain the encapsulated Ethernet frame data, and transmits the encapsulated Ethernet frame data to a second wireless backhaul device through a wireless air interface. Detailed description is provided in the following.

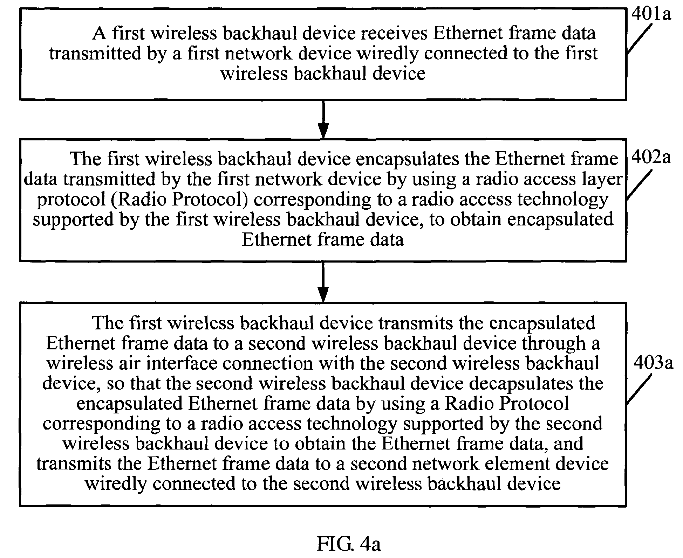

Referring to FIG 4a, FIG. 4a is a flow chart of an air interface transmission method provided by an embodiment of this application. As shown in FIG. 4a, the air interface transmission method may include the following steps.
401a: A first wireless backhaul device receives Ethernet frame data transmitted by a first network device wiredly connected to the first wireless backhaul device.
402a: The first wireless backhaul device encapsulates the Ethernet frame data transmitted by the first network device by using a radio access layer protocol (Radio Protocol) corresponding to a radio access technology supported by the first wireless backhaul device, to obtain encapsulated Ethernet frame data.
403a: The first wireless backhaul device transmits the encapsulated Ethernet frame data to a second wireless backhaul device through a wireless air interface connection with the second wireless backhaul device, so that the second wireless backhaul device decapsulates the encapsulated Ethernet frame data by using a Radio Protocol corresponding to a radio access technology supported by the second wireless backhaul device to obtain the Ethernet frame data, and transmits the Ethernet frame data to a second network element device wiredly connected to the second wireless backhaul device.

In the method described in FIG. 4a, the Ethernet frame data is directly transmitted between the first wireless backhaul device and the second wireless backhaul device, so that the introduced first and second wireless backhaul devices located at both sides of the wireless air interface may be considered as "switch" devices based on Ethernet header switching, with no need to introduce new network IP planning, thereby reducing consumption of IP addresses and skipping modifying route configuration of a mobile network.

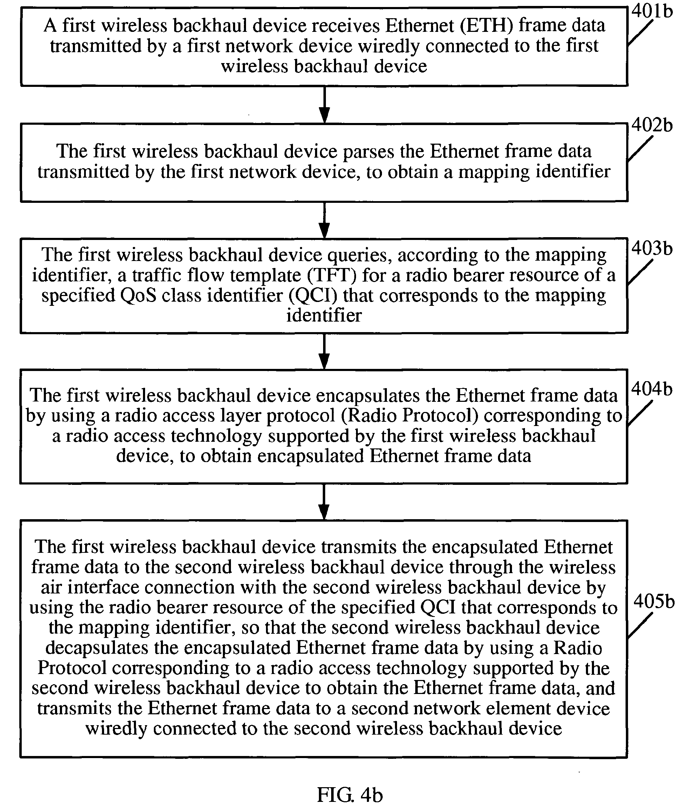

Referring to FIG. 4b, FIG. 4b is a flow chart of another air interface transmission method provided by an embodiment of this application. As shown in FIG 4b, the air interface transmission method may include the following steps.
401b: A first wireless backhaul device receives Ethernet (ETH) frame data transmitted by a first network device wiredly connected to the first wireless backhaul device.

In this application, the first wireless backhaul device may be a macro base station, may also be a micro base station, or another radio access node, and this application is not limited thereto.

In this application, the first network device may be a base station controller, may also be a core network device, for example, a mobile management entity (Mobile Management Entity, MME) or another equivalent network element, and may also be another user terminal (for example, a personal computer) or an access network device, and this application is not limited thereto.

In this application, the Ethernet frame data is also called data link layer data, for example, the Ethernet frame data may be obtained by further encapsulating IP frame data with an Ethernet header (ETH header), and the IP frame data is generally obtained by sequentially encapsulating payload (Payload) with a stream control transmission protocol (Stream Control Transmission Protocol, SCTP)/user datagram protocol (User Datagram Protocol, UDP) and an IP header. A format of the Ethernet frame data may be shown in the following Table 1:

**Table 1**

| |
|---|
| Payload |
| SCTP/UDP |
| IP header |
| ETH header |

402b: The first wireless backhaul device parses the Ethernet frame data (for example, with an Ethernet frame header) transmitted by the first network device, to obtain a mapping identifier.

In this application, the first wireless backhaul device may query, by using the mapping identifier, for a radio bearer resource of a specified quality of service class identifier (QoS Class Identifier, QCI) which is used for transmitting the Ethernet frame data.

In this application, the mapping identifier obtained by the first wireless backhaul device through parsing the Ethernet frame data may be formed of multiple parameters, for example, the mapping identifier may be formed of original parameters, such as a source media access control (Media Access Control, MAC) address and a destination MAC address, and extended parameters, such as a virtual local area network identity (VLAN ID) and a virtual local area network priority type (VLAN priority type). In this application, the VLAN ID and the VLAN priority type may be obtained through extension in a visible field of the Ethernet frame data.
403b: The first wireless backhaul device queries, according to the mapping identifier, a traffic flow template (Traffic Flow Template, TFT) for a radio bearer resource of a specified QoS class identifier (QoS Class Identifier, QCI) that corresponds to the mapping identifier.

In this application, the first wireless backhaul device may query, according to the mapping identifier, correspondence between a mapping identifier bound to a TFT and a radio bearer resource of a specified QCI for the radio bearer resource of the specified QCI that corresponds to the mapping identifier.

In this application, the TFT may be extended as follows:
VLAN ID type
VLAN priority type
......

In this application, since the TFT carries the original parameters (such as, the source MAC address and the destination MAC address) in the Ethernet frame data before extension, after the VLAN ID and the VLAN priority type are obtained through extension in the visible field of the Ethernet frame data, the TFT may be extended correspondingly, so that the extended TFT also carries the VLAN ID and the VLAN priority type, and the parameter set carried by the extended TFT is the same as the parameter set of the Ethernet frame data, that is, the parameter set in the TFT used for forming the mapping identifier is the same as the parameter set in the Ethernet frame data used for forming the mapping identifier. Therefore, the first wireless backhaul device may query, according to the mapping identifier of the Ethernet frame data, the TFT for the radio bearer resource of the specified QCI that corresponds to the mapping identifier.

Before this application, the mapping identifier may also be a low-6bit differentiated services code point (Differentiated Services Code Point) in a TOS field in an IP protocol, and correspondingly this application may extend the mapping identifier, so that the mapping identifier may not only rely on the low-6bit DSCP in the TOS field in the IP protocol, but also rely on a VLAN field of 802.1Q (including the VLAN ID and VLAN priority type).

In this application, through the extension of the visible field of the Ethernet frame data and the TFT to obtain the VLAN ID type and VLAN priority type, a better radio bearer resource of the specified QCI may be queried for, so as to extend a guarantee range of QoS.
404b: The first wireless backhaul device encapsulates the Ethernet frame data by using a radio access layer protocol (Radio Protocol) corresponding to a radio access technology supported by the first wireless backhaul device, to obtain encapsulated Ethernet frame data.

In this application, the radio access layer protocol (Radio Protocol) corresponding to the radio access technology supported by the first wireless backhaul device may be a Radio Protocol corresponding to the 3rd Generation Partnership Project LTE (The 3rd Generation Partnership Project LTE, 3GPP LTE) technology, may also be a Radio Protocol corresponding to a wideband code division multiple access (Wideband Code Division Multiple Access, WCDMA) technology, and may also be a Radio Protocol corresponding to a time division-synchronous code division multiple access (Time Division-Synchronous Code Division Multiple Access, TD-SCDMA) technology, or a Radio Protocol corresponding to a code division multiple access 2000 (Code Division Multiple Access 2000, CDMA2000) technology; this application is not specifically limited thereto.
405b: The first wireless backhaul device transmits the encapsulated Ethernet frame data to the second wireless backhaul device through the wireless air interface connection with the second wireless backhaul device by using the radio bearer resource of the specified QCI that corresponds to the mapping identifier, so that the second wireless backhaul device decapsulates the encapsulated Ethernet frame data by using a Radio Protocol corresponding to a radio access technology supported by the second wireless backhaul device to obtain the Ethernet frame data, and transmits the Ethernet frame data to a second network element device wiredly connected to the second wireless backhaul device.

In this application, the second wireless backhaul device may be a radio access node, a switch, a router, and may also be another hot-spot device; this application is not limited thereto.

In this application, the second network device may be a macro base station or a micro base station, and may also be another user terminal (for example, a personal computer) or an access network device; this application is not limited thereto.

In this application, the radio access layer protocol (Radio Protocol) corresponding to the radio access technology supported by the second wireless backhaul device may be a Radio Protocol corresponding to a 3GPP LTE technology, may also be a Radio Protocol corresponding to a WCDMA technology, and may also be a Radio Protocol corresponding to a TD-SCDMA technology, or a Radio Protocol corresponding to a CDMA2000 technology; this application is not specifically limited thereto. In this application, the Radio Protocol corresponding to the radio access technology supported by the second wireless backhaul device is the same as the Radio Protocol corresponding to the radio access technology supported by the first wireless backhaul device.

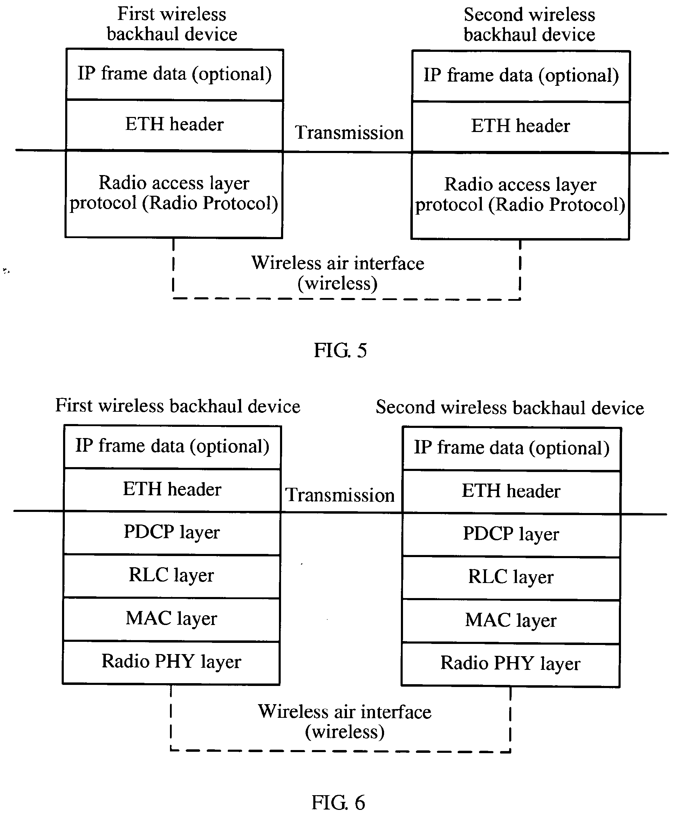

Referring to FIG. 5, FIG. 5 is a schematic diagram of an air interface protocol between a first wireless backhaul device and a second wireless backhaul device provided by this application. As shown in FIG. 5, a Radio Protocol corresponding to a radio access technology supported by the first wireless backhaul device may encapsulate Ethernet frame data (for example, including IP frame data and an ETH header); and a Radio Protocol corresponding to a radio access technology supported by the second wireless backhaul device may encapsulate Ethernet frame data (for example, including IP frame data and an ETH header). It should be noted that, the Ethernet frame data may be formed of another payload (Payload) and an ETH header, and this application is not limited thereto.

For example, when the radio access technology supported by the first wireless backhaul device and the second wireless backhaul device is the 3GPP LTE technology, the Radio Protocol corresponding to the 3GPP LTE technology sequentially includes, from bottom up, a Radio PHY layer, an MAC layer, an RLC layer, and a PDCP layer, and correspondingly, a schematic diagram of an air interface protocol between the first wireless backhaul device and the second wireless backhaul device may be shown in FIG. 6.

It should be noted that, when the radio access technology supported by the first wireless backhaul device and the second wireless backhaul device is another technology, the Radio Protocol corresponding to the technology is well-known to a person skilled in the art, and details are not repeatedly described herein.

In this application, direct transmission of the encapsulated Ethernet frame data through a wireless air interface may lead to increase of overhead, so that before transmitting the encapsulated Ethernet frame data to the second wireless backhaul device through a wireless air interface connection with the second wireless backhaul device by using a radio bearer resource of a specified QCI that corresponds to the mapping identifier, the first wireless backhaul device may perform header compression processing on the encapsulated Ethernet frame data, so as to improve transmission efficiency of the wireless air interface.

In this application, the Ethernet frame data (also called a data link layer frame) is directly transmitted between the first wireless backhaul device and the second wireless backhaul device, so that the introduced first and second wireless backhaul devices located at both sides of the wireless air interface may be considered as "switch" devices based on Ethernet header switching, with no need to introduce new network IP planning, thereby reducing consumption of IP addresses and skipping modifying route configuration of a mobile network.

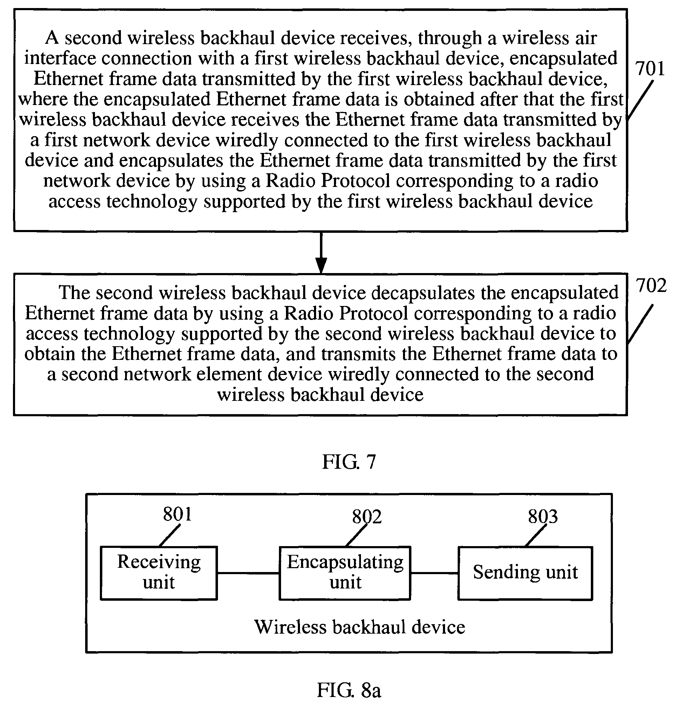

Referring to FIG. 7, FIG. 7 is a flow chart of another air interface transmission method provided by an embodiment of this application. As shown in FIG. 7, the air interface transmission method may include the following steps.
701: A second wireless backhaul device receives, through a wireless air interface connection with a first wireless backhaul device, encapsulated Ethernet frame data transmitted by the first wireless backhaul device, where the encapsulated Ethernet frame data is obtained after the first wireless backhaul device receives Ethernet frame data transmitted by a first network device wiredly connected to the first wireless backhaul device, and encapsulates the Ethernet frame data transmitted by the first network device by using a Radio Protocol corresponding to a radio access technology supported by the first wireless backhaul device.
702: The second wireless backhaul device decapsulates the encapsulated Ethernet frame data by using a Radio Protocol corresponding to a radio access technology supported by the second wireless backhaul device to obtain the Ethernet frame data, and transmits the Ethernet frame data to a second network element device wiredly connected to the second wireless backhaul device.

In this application, if the encapsulated Ethernet frame data transmitted by the first wireless backhaul device undergoes header compression processing, before decapsulating the encapsulated Ethernet frame data by using a Radio Protocol corresponding to a radio access technology supported by the second wireless backhaul device to obtain the Ethernet frame data, the second wireless backhaul device may first perform header decompression processing on the encapsulated Ethernet frame data, and then decapsulate the encapsulated Ethernet frame data by using the Radio Protocol corresponding to the radio access technology supported by the second wireless backhaul device to obtain the Ethernet frame data, and transmit the Ethernet frame data to the second network element device wiredly connected to the second wireless backhaul device.

In this application, an Ethernet frame (also called a data link layer frame) is directly transmitted between the first wireless backhaul device and the second wireless backhaul device, so that the introduced first and second wireless backhaul devices located at both sides of the wireless air interface may be considered as "switch" devices based on Ethernet header switching, with no need to introduce new network IP planning, thereby reducing consumption of IP addresses and skipping modifying route configuration of a mobile network.

Referring to FIG. 8a, FIG. 8a is a structural diagram of a wireless backhaul device provided by an embodiment of this application. As shown in FIG. 8a, the wireless backhaul device may include:
a receiving unit 801, configured to receive Ethernet frame data transmitted by a first network device wiredly connected to the local wireless backhaul device;
an encapsulating unit 802, configured to encapsulate the Ethernet frame data by using a Radio Protocol corresponding to a radio access technology supported by the local wireless backhaul device, to obtain encapsulated Ethernet frame data; and
a sending unit 803, configured to transmit the encapsulated Ethernet frame data to a second wireless backhaul device through a wireless air interface connection between the local wireless backhaul device and the second wireless backhaul device, so that the second wireless backhaul device decapsulates the encapsulated Ethernet frame data by using a Radio Protocol corresponding to a radio access technology supported by the second wireless backhaul device to obtain the Ethernet frame data, and transmits the Ethernet frame data to a second network element device wiredly connected to the second wireless backhaul device.

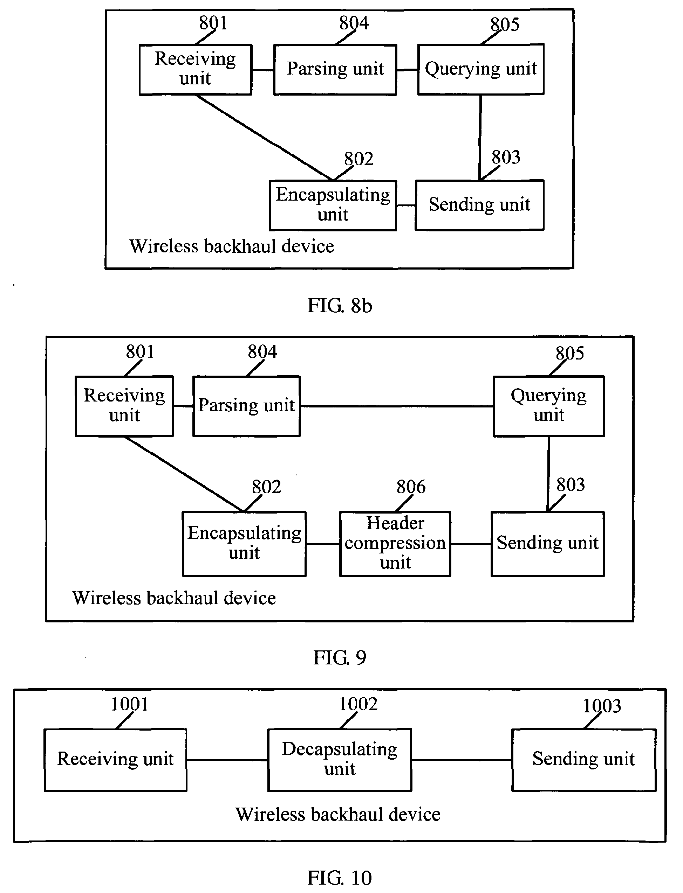

Referring to FIG. 8b, FIG. 8b is a structural diagram of another wireless backhaul device provided by an embodiment of this application. The wireless backhaul device shown in FIG. 8b is obtained by optimizing the wireless backhaul device shown in FIG 8a. Compared with the wireless backhaul device shown in FIG. 8a, the wireless backhaul device shown in FIG 8b further includes:
a parsing unit 804, configured to parse the Ethernet frame data transmitted by the first network device and received by the receiving unit 801, to obtain a mapping identifier; and
a querying unit 805, configured to query, according to the mapping identifier, a TFT for a radio bearer resource of a specified QCI that corresponds to the mapping identifier.

Correspondingly, the sending unit 803 is specifically configured to transmit the encapsulated Ethernet frame data to the second wireless backhaul device through the wireless air interface connection between the local wireless backhaul device and the second wireless backhaul device by using the radio bearer resource of the specified QCI that corresponds to the mapping identifier, so that the second wireless backhaul device decapsulates the encapsulated Ethernet frame data by using the Radio Protocol corresponding to the radio access technology supported by the second wireless backhaul device to obtain the Ethernet frame data, and transmits the Ethernet frame data to the second network element device wiredly connected to the second wireless backhaul device.

In this application, the querying unit 805 is specifically configured to query, according to the mapping identifier, correspondence between a mapping identifier bound to a TFT and a radio bearer resource of a specified QCI for the radio bearer resource of the specified QCI that corresponds to the mapping identifier.

In the wireless backhaul device shown in FIG. 8a and FIG. 8b, the Radio Protocol corresponding to the radio access technology supported by the local wireless backhaul device is the same as the Radio Protocol corresponding to the radio access technology supported by the second wireless backhaul device.

Referring to FIG. 9, FIG. 9 is a structural diagram of another wireless backhaul device provided by an embodiment of this application. The wireless backhaul device shown in FIG. 9 is obtained by optimizing the wireless backhaul device shown in FIG. 8b. Compared with the wireless backhaul device shown in FIG 8b, the wireless backhaul device shown in FIG. 9 further includes:
a header compression unit 806, configured to perform header compression processing on the encapsulated Ethernet frame data obtained by the encapsulating unit 802, and output the Ethernet frame data to the sending unit 803.

Correspondingly, the sending unit 803 is configured to transmit the encapsulated Ethernet frame data obtained through the header compression processing to the second wireless backhaul device through the wireless air interface connection between the local wireless backhaul device and the second wireless backhaul device by using the radio bearer resource of the specified QCI that corresponds to the mapping identifier, so as to improve transmission efficiency of the wireless air interface.

The wireless backhaul device provided by this application may directly transmit the Ethernet frame data (also called a data link layer frame) to the second wireless backhaul device through the wireless air interface connection with the second wireless backhaul device, so that the wireless backhaul devices located at both sides of the wireless air interface may be considered as "switch" devices based on Ethernet header switching, with no need to introduce new network IP planning, thereby reducing consumption of IP addresses and skipping modifying route configuration of a mobile network.

Referring to FIG. 10, FIG. 10 is a structural diagram of another wireless backhaul device provided by an embodiment of this application. As shown in FIG. 10, the wireless backhaul device may include:
a receiving unit 1001, configured to receive, through a wireless air interface connection between the local wireless backhaul device and a first wireless backhaul device, encapsulated Ethernet frame data transmitted by the first wireless backhaul device, where the encapsulated Ethernet frame data is obtained after the first wireless backhaul device receives Ethernet frame data transmitted by a first network device wiredly connected to the first wireless backhaul device, and encapsulates the Ethernet frame data transmitted by the first network device by using a Radio Protocol corresponding to a radio access technology supported by the first wireless backhaul device;
a decapsulating unit 1002, configured to decapsulate the encapsulated Ethernet frame data by using a Radio Protocol corresponding to a radio access technology supported by the local wireless backhaul device to obtain the Ethernet frame data; and
a sending unit 1003, configured to transmit the Ethernet frame data to a second network element device wiredly connected to the local backhaul device.

In this application, the Radio Protocol corresponding to the radio access technology supported by the first wireless backhaul device is the same as the Radio Protocol corresponding to the radio access technology supported by the local wireless backhaul device.

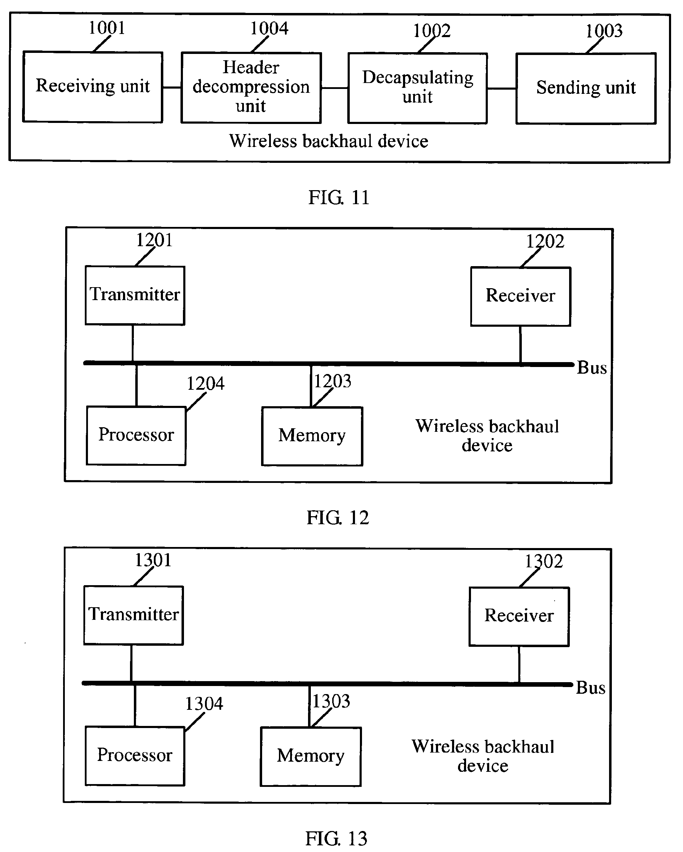

Referring to FIG. 11, FIG. 11 is a structural diagram of another wireless backhaul device provided by an embodiment of this application. The wireless backhaul device shown in FIG. 11 is obtained by optimizing the wireless backhaul device shown in FIG. 10. Compared with the wireless backhaul device shown in FIG. 10, the wireless backhaul device shown in FIG. 11 further includes:
a header decompression unit 1004, configured to, before the decapsulating unit 1002 decapsulates the encapsulated Ethernet frame data by using the Radio Protocol corresponding to the radio access technology supported by the local wireless backhaul device to obtain the Ethernet frame data, perform header decompression processing on the encapsulated Ethernet frame data and output the encapsulated Ethernet frame data to the decapsulating unit 1002 for decapsulation.

The wireless backhaul device provided by this application may receive, through the wireless air interface connection with the first wireless backhaul device, the Ethernet frame data (also called a data link layer frame) directly transmitted by the first wireless backhaul device, so that the wireless backhaul devices located at both sides of the wireless air interface may be considered as "switch" devices based on Ethernet header switching, with no need to introduce new network IP planning, thereby reducing consumption of IP addresses and skipping modifying route configuration of a mobile network.

Referring to FIG. 12, FIG. 12 is a structural diagram of another wireless backhaul device provided by an embodiment of this application.

As shown in FIG. 12, the wireless backhaul device includes a transmitter 1201, a receiver 1202, a memory 1203 and a processor 1204 connected to the transmitter 1201, the receiver 1202 and the memory 1203; and in some embodiments of this application, the processor 1204 may be connected to the transmitter 1201, the receiver 1202 and the memory 1203 through a bus or in another manner, where connection through a bus is taken as an example in FIG. 12.

The memory 1203 stores a group of program code, and the processor 1204 is configured to invoke the program code stored in the memory 1203, so as to implement the following operations:
receiving Ethernet frame data transmitted by a first network device wiredly connected to the local wireless backhaul device;
encapsulating the Ethernet frame data by using a Radio Protocol corresponding to a radio access technology supported by the local wireless backhaul device, to obtain encapsulated Ethernet frame data; and
transmitting the encapsulated Ethernet frame data to a second wireless backhaul device through a wireless air interface connection between the local wireless backhaul device and the second wireless backhaul device, so that the second wireless backhaul device decapsulates the encapsulated Ethernet frame data by using a Radio Protocol corresponding to a radio access technology supported by the second wireless backhaul device to obtain the Ethernet frame data, and transmits the Ethernet frame data to a second network element device wiredly connected to the second wireless backhaul device.

In this application, before encapsulating the Ethernet frame data by using a Radio Protocol corresponding to a radio access technology supported by the local wireless backhaul device, to obtain encapsulated Ethernet frame data, the processor 1204 further implements the following operations:
parsing the Ethernet frame data transmitted by the first network device, to obtain a mapping identifier; and
querying, according to the mapping identifier, a TFT for a radio bearer resource of a specified QCI that corresponds to the mapping identifier.

Correspondingly, the transmitting the encapsulated Ethernet frame data to a second wireless backhaul device through a wireless air interface connection between the local wireless backhaul device and the second wireless backhaul device includes:
transmitting the encapsulated Ethernet frame data to the second wireless backhaul device through the wireless air interface connection between the local wireless backhaul device and the second wireless backhaul device by using the radio bearer resource of the specified QCI that corresponds to the mapping identifier.

In this application, the querying, by the processor 1204 according to the mapping identifier, a TFT for a radio bearer resource of a specified QCI that corresponds to the mapping identifier specifically includes:
querying, by the processor 1204 according to the mapping identifier, correspondence between a mapping identifier bound to a TFT and a radio bearer resource of a specified QoS class identifier for the radio bearer resource of the specified QCI that corresponds to the mapping identifier.

In this application, before transmitting the encapsulated Ethernet frame data to the second wireless backhaul device through the wireless air interface connection between the local wireless backhaul device and the second wireless backhaul device by using the radio bearer resource of the specified QCI that corresponds to the mapping identifier, the processor 1204 further implements the following operations:
performing header compression processing on the encapsulated Ethernet frame data.

In this application, the Radio Protocol corresponding to the radio access technology supported by the local wireless backhaul device is the same as the Radio Protocol corresponding to the radio access technology supported by the second wireless backhaul device.

The wireless backhaul device shown in FIG. 12 may directly transmit the Ethernet frame data (also called a data link layer frame) to the second wireless backhaul device through the wireless air interface connection with the second wireless backhaul device, so that the wireless backhaul devices located at both sides of the wireless air interface may be considered as "switch" devices based on Ethernet header switching, with no need to introduce new network IP planning, thereby reducing consumption of IP addresses and skipping modifying route configuration of a mobile network.

Referring to FIG. 13, FIG 13 is a structural diagram of another wireless backhaul device provided by an embodiment of this application.

As shown in FIG. 13, the wireless backhaul device includes a transmitter 1301, a receiver 1302, a memory 1303 and a processor 1304 connected to the transmitter 1301, the receiver 1302 and the memory 1303; and in some embodiments of this application, the processor 1304 may be connected to the transmitter 1301, the receiver 1302 and the memory 1303 through a bus or in another manner, where connection through a bus is taken as an example in FIG. 13.

The memory 1303 stores a group of program code, and the processor 1304 is configured to invoke the program code stored in the memory 1303, so as to implement the following operations:
receiving, through a wireless air interface connection between the local wireless backhaul device and a first wireless backhaul device, encapsulated Ethernet frame data transmitted by the first wireless backhaul device, where the encapsulated Ethernet frame data is obtained after the first wireless backhaul device receives Ethernet frame data transmitted by a first network device wiredly connected to the first wireless backhaul device, and encapsulates the Ethernet frame data transmitted by the first network device by using a Radio Protocol corresponding to a radio access technology supported by the first wireless backhaul device;
decapsulating the encapsulated Ethernet frame data by using a Radio Protocol corresponding to a radio access technology supported by the local wireless backhaul device to obtain the Ethernet frame data; and
transmitting the Ethernet frame data to a second network element device wiredly connected to the local backhaul device.

In this application, the Radio Protocol corresponding to the radio access technology supported by the first wireless backhaul device is the same as the Radio Protocol corresponding to the radio access technology supported by the local wireless backhaul device.

In this application, if the encapsulated Ethernet frame data transmitted by the first wireless backhaul device undergoes header compression processing, the processor 1304 further implements the following operations:
before decapsulating the encapsulated Ethernet frame data by using the Radio Protocol corresponding to the radio access technology supported by the local wireless backhaul device to obtain the Ethernet frame data, performing header decompression processing on the encapsulated Ethernet frame data transmitted by the first wireless backhaul device.

The wireless backhaul device shown in FIG. 13 may receive, through the wireless air interface connection with the first wireless backhaul device, the Ethernet frame data (also called a data link layer frame) directly transmitted by the first wireless backhaul device, so that the wireless backhaul devices located at both sides of the wireless air interface may be considered as "switch" devices based on Ethernet header switching, with no need to introduce new network IP planning, thereby reducing consumption of IP addresses and skipping modifying route configuration of a mobile network.

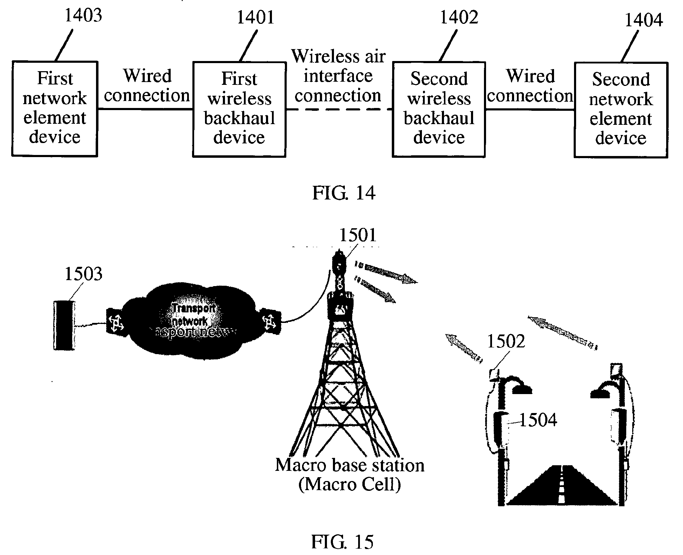

Referring to FIG. 14, FIG. 14 is a structural diagram of an air interface transmission system provided by an embodiment of this application. As shown in FIG. 14, the system may include:
a first wireless backhaul device 1401, a second wireless backhaul device 1402, a first network element device 1403 and a second network element device 1404, where the first wireless backhaul device 1401 is wiredly connected to the first network element device 1403, the second wireless backhaul device 1402 is wiredly connected to the second network element device 1404, and the first wireless backhaul device 1401 is connected to the second wireless backhaul device 1402 through a wireless air interface.

In this application, the structure of the first wireless backhaul device 1401 may be shown in FIG. 8a, FIG 8b, FIG. 9 or FIG. 12, and the structure of the second wireless backhaul device 1402 may be shown in FIG. 10, FIG. 11 or FIG. 13; and details are not repeatedly described herein.

The first network element device 1403 is configured to transmit Ethernet frame data to the first wireless backhaul device 1401.

The first wireless backhaul device 1401 is configured to receive the Ethernet frame data transmitted by the first network device 1403, encapsulate the Ethernet frame data transmitted by the first network device 1403 by using a Radio Protocol corresponding to a radio access technology supported by the first wireless backhaul device to obtain encapsulated Ethernet frame data, and transmit the encapsulated Ethernet frame data to the second wireless backhaul device 1402 through a wireless air interface connection with the second wireless backhaul device 1402.

The second wireless backhaul device 1402 is configured to receive the encapsulated Ethernet frame data transmitted by the first wireless backhaul device 1401, decapsulate the encapsulated Ethernet frame data by using a Radio Protocol corresponding to a radio access technology supported by the second wireless backhaul device to obtain the Ethernet frame data, and transmit the Ethernet frame data to the second network element device 1404.

The second network element device 1404 is configured to receive the Ethernet frame data transmitted by the second wireless backhaul device 1402.

In this application, the Radio Protocol corresponding to the radio access technology supported by the first wireless backhaul device 1401 is the same as the Radio Protocol corresponding to the radio access technology supported by the second wireless backhaul device 1402.

In this application, the first wireless backhaul device 1401 is further configured to, before transmitting the encapsulated Ethernet frame data to the second wireless backhaul device 1402 through the wireless air interface connection with the second wireless backhaul device 1402, perform header compression processing on the encapsulated Ethernet frame data; and correspondingly, the second wireless backhaul device 1402 is further configured to, before decapsulating the encapsulated Ethernet frame data by using the Radio Protocol corresponding to the radio access technology supported by the second wireless backhaul device to obtain the Ethernet frame data, perform header decompression processing on the encapsulated Ethernet frame data, so as to improve transmission efficiency of the wireless air interface.

In the air interface transmission system shown in FIG 14, the first wireless backhaul device 1401 may directly transmit the Ethernet frame data (also called a data link layer frame) to the second wireless backhaul device 1402 through the wireless air interface connection with the second wireless backhaul device 1402, so that the wireless backhaul devices located at both sides of the wireless air interface may be considered as "switch" devices based on Ethernet header switching, with no need to introduce new network IP planning, thereby reducing consumption of IP addresses and skipping modifying route configuration of a mobile network.

Referring to FIG. 15, FIG. 15 is a structural diagram of another air interface transmission system provided by an embodiment of this application. As shown in FIG. 15, the system may include:
a first wireless backhaul device 1501, a second wireless backhaul device 1502, a first network element device 1503 and a second network element device 1504, where the first wireless backhaul device 1501 may be a base station (Base Station, BS) in an eRelay system, the second wireless backhaul device 1502 may be a radio access node (eRelay Radio Node, RRN) in the eRelay system, the first network element device 1503 may be a base station controller or a core network device (for example, an MME), and the second network element device 1504 may be a micro base station (Small Cell). As shown in FIG. 15, the first wireless backhaul device 1501 may be wiredly connected to the first network element device 1503 through a transport network (Transport network), the second wireless backhaul device 1502 may be wiredly connected to the second network element device 1504, and the first wireless backhaul device 1501 may be connected to the second wireless backhaul device 1502 through a wireless air interface. In this application, when the first wireless backhaul device 1501 is a BS in the eRelay system, the deployment of the first wireless backhaul device 1501 is flexible, and as shown in FIG. 15, the first wireless backhaul device 1501 (that is, the BS in the eRelay system) may be deployed on a macro base station (Macro Cell).

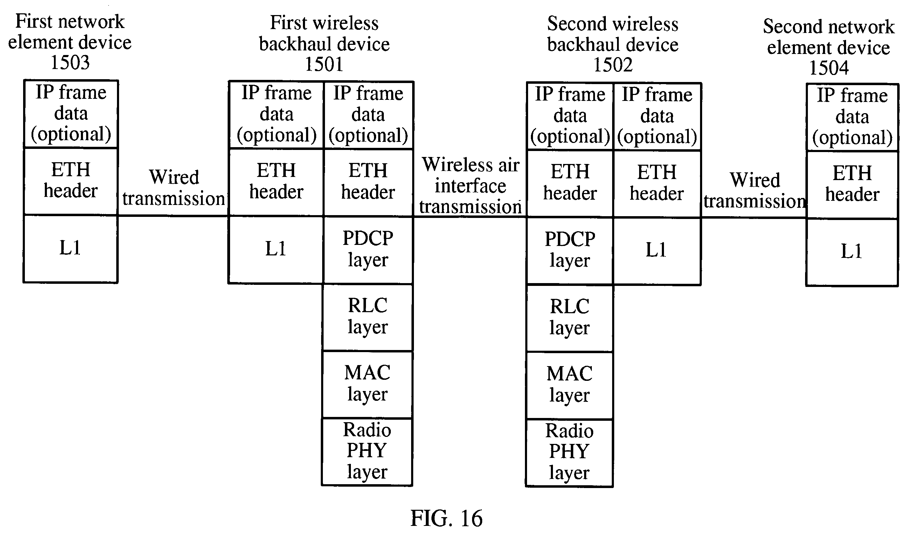

Referring to FIG 16, FIG. 16 is a schematic diagram of an air interface protocol shown in FIG. 15. In the air interface protocol shown in FIG. 16, it is assumed that the radio access mode supported by the first wireless backhaul device 1501 and the second wireless backhaul device 1502 is a 3GPP LTE technology. As shown in FIG. 16, the first network element device 1503 transmits the Ethernet frame data (it is assumed that the Ethernet frame data is formed by encapsulating IP frame data with an ETH header) to the first wireless backhaul device 1501 through L1 layer switching; the first wireless backhaul device 1401 receives the Ethernet frame data transmitted by the first network device 1503, parses the Ethernet frame header of the Ethernet frame data, obtains a mapping identifier, and queries, according to the mapping identifier, a TFT for a radio bearer resource of a specified QCI corresponding to the mapping identifier; and encapsulates the Ethernet frame data by using a Radio Protocol corresponding to the 3GPP LTE technology supported by the first wireless backhaul device (the Radio Protocol sequentially includes, from bottom up, a Radio PHY layer, an MAC layer, an RLC layer, and a PDCP layer), to obtain encapsulated Ethernet frame data, and transmits the encapsulated Ethernet frame data to the second wireless backhaul device 1502 through a wireless air interface connection with the second wireless backhaul device 1502 by using the radio bearer resource of the specified QCI corresponding to the mapping identifier; the second wireless backhaul device 1502 receives the encapsulated Ethernet frame data transmitted by the first wireless backhaul device 1501, decapsulates the encapsulated Ethernet frame data by using a Radio Protocol corresponding to the 3GPP LTE technology supported by the second wireless backhaul device (the Radio Protocol sequentially includes, from bottom up, a Radio PHY layer, an MAC layer, an RLC layer, and a PDCP layer) to obtain the Ethernet frame data, and transmits the Ethernet frame data to the second network element device 1504; and the second network element device 1504 receives the Ethernet frame data transmitted by the second wireless backhaul device 1502.

The air interface transmission system provided by this application may be applied to the eRelay system, and the first wireless backhaul device 1501 may directly transmit the Ethernet frame data (also called a data link layer frame) to the second wireless backhaul device 1502 through the wireless air interface connection with the second wireless backhaul device 1502, so that the wireless backhaul devices located at both sides of the wireless air interface may be considered as "switch" devices based on Ethernet heater switching, with no need to introduce new network IP planning, thereby reducing consumption of IP addresses and skipping modifying route configuration of a mobile network.

In the system shown in FIG. 15, the 3GPP LTE technology is used as a radio access technology, because the 3GPP LTE technology has advantages in bandwidth, air interface performance, and the like, and is also a next generation radio access technology. However, this application is not limited to the 3GPP LTE technology. When a cost and required specification of the device are different, radio access modes such as WCDMA, TD-SCDMA, and CDMA2000 may be adopted to directly carry the Ethernet frame data.

In this application, Ethernet frame data is directly transmitted between wireless backhaul devices located at both sides of a wireless air interface, so that an L2 layer forwarding state (that is, a switch state) appears at both sides of the wireless air interface, this state may be considered as a "wireless switch", and this application may effectively solve problems in scenarios where it is difficult to deploy a wired switching device or provide wired transmission.

A person of ordinary skill in the art may understand that all or a part of the steps of the methods in the foregoing embodiments may be implemented by a program instructing relevant hardware. The program may be stored in a computer readable storage medium, and the storage medium may include: a USB flash drive, a read-only memory (Read-Only Memory, ROM), a random access memory (Random Access Memory, RAM), a magnetic disk, or an optical disc.

The foregoing describes the air interface transmission method and the related device and system provided by the embodiments of the present invention in detail. The principles and implementation manners of the present invention are described herein through specific examples. The description about the embodiments of the present invention is merely used to help understand the method and core ideas of the present invention. A person of ordinary skill in the art may make variations in terms of the specific implementation manner and application scope according to the ideas of the present invention. Therefore, the content of the specification shall not be construed as a limit to the present invention.

## Claims

1. An air interface transmission method, comprising:
receiving (401b), by a first wireless backhaul device, Ethernet frame data;
encapsulating (404b), by the first wireless backhaul device, the Ethernet frame data by using a radio access layer protocol corresponding to a radio access technology supported by the first wireless backhaul device, to obtain encapsulated Ethernet frame data; and
transmitting, by the first wireless backhaul device, the encapsulated Ethernet frame data to a second wireless backhaul device through a wireless air interface
**characterized in that**
before the encapsulating, by the first wireless backhaul device, the Ethernet frame data by using a radio access layer protocol corresponding to a radio access technology supported by the first wireless backhaul device, to obtain encapsulated Ethernet frame data, the method further comprises:
parsing (402b), by the first wireless backhaul device, the Ethernet frame data, to obtain a mapping identifier; and
querying (403b), by the first wireless backhaul device according to the mapping identifier, a traffic flow template for a radio bearer resource of a specified quality of service, QoS, class identifier that corresponds to the mapping identifier; and
the transmitting, by the first wireless backhaul device, the encapsulated Ethernet frame data to a second wireless backhaul device through a wireless air interface comprises:
transmitting (405b), by the first wireless backhaul device, the encapsulated Ethernet frame data to the second wireless backhaul device through the wireless air interface by using the radio bearer resource of the specified QoS class identifier that corresponds to the mapping identifier.

2. The method according to claim 1, wherein the querying (403b), by the first wireless backhaul device according to the mapping identifier, a traffic flow template for a radio bearer resource of a specified QoS class identifier that corresponds to the mapping identifier comprises:
querying, by the first wireless backhaul device according to the mapping identifier, correspondence between a mapping identifier bound to a traffic flow template and a radio bearer resource of a specified QoS class identifier for the radio bearer resource of the specified QoS class identifier that corresponds to the mapping identifier.

3. The method according to claim 2, wherein before the transmitting, by the first wireless backhaul device, the encapsulated Ethernet frame data to the second wireless backhaul device through the wireless air interface by using the radio bearer resource of the specified QoS class identifier that corresponds to the mapping identifier, the method further comprises:
performing, by the first wireless backhaul device, header compression processing on the encapsulated Ethernet frame data.

4. The method according to any one of claims 1 to 3, wherein
the radio access layer protocol corresponding to the radio access technology supported by the first wireless backhaul device is the same as a radio access layer protocol corresponding to a radio access technology supported by the second wireless backhaul device.

5. A wireless backhaul device, served as a first wireless backhaul device, comprising:
a receiving unit (801), configured to receive Ethernet frame data;
an encapsulating unit (802), configured to encapsulate the Ethernet frame data by using a radio access layer protocol corresponding to a radio access technology supported by the first wireless backhaul device, to obtain encapsulated Ethernet frame data; and
a sending unit (803), configured to transmit the encapsulated Ethernet frame data to a second wireless backhaul device through a wireless air interface
**characterized by**
a parsing unit (804), configured to parse the Ethernet frame data, to obtain a mapping identifier; and
a querying unit (805), configured to query, according to the mapping identifier, a traffic flow template for a radio bearer resource of a specified QoS class identifier that corresponds to the mapping identifier, and
the sending unit (803) is configured to transmit the encapsulated Ethernet frame data to the second wireless backhaul device through the wireless air interface by using the radio bearer resource of the specified QoS class identifier that corresponds to the mapping identifier.

6. The wireless backhaul device according to claim 5, wherein the querying unit (805) is configured to query, according to the mapping identifier, correspondence between a mapping identifier bound to a traffic flow template and a radio bearer resource of a specified QoS class identifier for the radio bearer resource of the specified QoS class identifier that corresponds to the mapping identifier.

7. The wireless backhaul device according to claim 6, further comprising:
a header compression unit (806), configured to perform header compression processing on the encapsulated Ethernet frame data obtained by the encapsulating unit, and output the encapsulated Ethernet frame data to the sending unit.

8. The wireless backhaul device according to any one of claims 5 to 7, wherein
the radio access layer protocol corresponding to the radio access technology supported by the first wireless backhaul device is the same as a radio access layer protocol corresponding to a radio access technology supported by the second wireless backhaul device.

## Patentansprüche

1. Verfahren für eine Luftschnittstellenübertragung, umfassend:
Empfangen (401b) von Ethernet-Framedaten in einem ersten drahtlosen Rücktransportgerät;
Einkapseln (404b) der Ethernet-Framedaten durch das erste drahtlose Rücktransportgerät, indem ein Netzzugangsschichtprotokoll verwendet wird, das einer Netzzugangstechnologie entspricht, die von dem ersten drahtlosen Rücktransportgerät unterstützt wird, um eingekapselte Ethernet-Framedaten zu erhalten; und
Übertragen der eingekapselten Ethernet-Framedaten durch das erste drahtlose Rücktransportgerät über eine drahtlose Luftschnittstelle an ein zweites drahtloses Rücktransportgerät;
**dadurch gekennzeichnet, dass**
vor dem Einkapseln der Ethernet-Framedaten durch das erste drahtlose Rücktransportgerät, indem ein Netzzugangsschichtprotokoll verwendet wird, das einer Netzzugangstechnologie entspricht, die von dem ersten drahtlosen Rücktransportgerät unterstützt wird, um eingekapselte Ethernet-Framedaten zu erhalten, das Verfahren außerdem umfasst:
Analysieren (402b) der Ethernet-Framedaten durch das erste drahtlose Rücktransportgerät, um eine Abbildungskennung zu erhalten; und
Abfragen (403b) einer Netzverkehrsstrommaske für eine Netzträgerressource einer festgelegten Servicequalitätsklassenkennung ("Quality of Service"-, QoS-Klassenkennung), die der Abbildungskennung entspricht, durch das erste drahtlose Rücktransportgerät gemäß der Abbildungskennung; und
das Übertragen der eingekapselten Ethernet-Framedaten durch das erste Rücktransportgerät über eine drahtlose Luftschnittstelle an ein zweites drahtloses Rücktransportgerät umfasst:
Übertragen (405b) der eingekapselten Ethernet-Framedaten durch das erste drahtlose Rücktransportgerät über die drahtlose Luftschnittstelle an das zweite drahtlose Rücktransportgerät, indem die Netzträgerressource der festgelegten QoS-Klassenkennung verwendet wird, die der Abbildungskennung entspricht.

2. Verfahren nach Anspruch 1, wobei das Abfragen (403b) einer Netzverkehrsstrommaske für eine Netzträgerressource einer festgelegten QoS-Klassenkennung, die der Abbildungskennung entspricht, durch das erste drahtlose Rücktransportgerät gemäß der Abbildungskennung umfasst:
Abfragen einer Übereinstimmung zwischen einer Abbildungskennung, die an eine Netzverkehrsstrommaske gebunden ist, und einer Netzträgerressource einer festgelegten QoS-Klassenkennung für die Netzträgerressource der festgelegten QoS-Klassenkennung, die der Abbildungskennung entspricht, durch das erste drahtlose Rücktransportgerät gemäß der Abbildungskennung.

3. Vorrichtung nach Anspruch 2, wobei das Verfahren vor dem Übertragen der eingekapselten Ethernet-Framedaten durch das erste drahtlose Rücktransportgerät über die drahtlose Luftschnittstelle an das zweite drahtlose Rücktransportgerät, indem die Netzträgerressource der festgelegten QoS-Klassenkennung verwendet wird, die der Abbildungskennung entspricht, außerdem umfasst:
Ausführen einer Kopfzeilenkomprimierungsverarbeitung an den eingekapselten Ethernet-Framedaten durch das erste drahtlose Rücktransportgerät.

4. Verfahren nach einem der Ansprüche 1 bis 3, wobei
das Netzzugangsschichtprotokoll, das der Netzzugangstechnologie entspricht, die von dem ersten drahtlosen Rücktransportgerät unterstützt wird, das Gleiche ist wie ein Netzzugangsschichtprotokoll, das einer Netzzugangstechnologie entspricht, die von dem zweiten drahtlosen Rücktransportgerät unterstützt wird.

5. Drahtloses Rücktransportgerät, das als ein erstes drahtloses Rücktransportgerät dient, umfassend:
eine Empfangseinheit (801), die konfiguriert ist, Ethernet-Framedaten zu empfangen;
eine Einkapseleinheit (802), die konfiguriert ist, die Ethernet-Framedaten einzukapseln, indem ein Netzzugangsschichtprotokoll verwendet wird, das einer Netzzugangstechnologie entspricht, die von dem ersten drahtlosen Rücktransportgerät unterstützt wird, um eingekapselte Ethernet-Framedaten zu erhalten; und
eine Sendeeinheit (803), die konfiguriert ist, die eingekapselten Ethernet-Framedaten über eine drahtlose Luftschnittstelle an ein zweites drahtloses Rücktransportgerät zu übertragen;
**gekennzeichnet durch**
eine Analyseeinheit (804), die konfiguriert ist, die Ethernet-Framedaten zu analysieren, um eine Abbildungskennung zu erhalten; und
eine Abfrageeinheit (805), die konfiguriert ist, eine Netzverkehrsstrommaske für eine Netzträgerressource einer festgelegten QoS-Klassenkennung, die der Abbildungskennung entspricht, gemäß der Abbildungskennung abzufragen; und
wobei die Sendeeinheit (803) konfiguriert ist, die eingekapselten Ethernet-Framedaten über die drahtlose Luftschnittstelle an das zweite drahtlose Rücktransportgerät zu übertragen, indem die Netzträgerressource der festgelegten QoS-Klassenkennung verwendet wird, die der Abbildungskennung entspricht.

6. Drahtloses Rücktransportgerät nach Anspruch 5, wobei die Abfrageeinheit (805) konfiguriert ist, eine Übereinstimmung zwischen einer Abbildungskennung, die an eine Netzverkehrsstrommaske gebunden ist, und einer Netzträgerressource einer festgelegten QoS-Klassenkennung für die Netzträgerressource der festgelegten QoS-Klassenkennung, die der Abbildungskennung entspricht, gemäß der Abbildungskennung abzufragen.

7. Drahtloses Rücktransportgerät nach Anspruch 6, das außerdem umfasst:
eine Kopfzeilenkomprimierungseinheit (806), die konfiguriert ist, eine Kopfzeilenkomprimierungsverarbeitung an den eingekapselten Ethernet-Framedaten auszuführen, die durch die Einkapselungseinheit erhalten wurden, und die eingekapselten Ethernet-Framedaten an die Sendeeinheit auszugeben.

8. Drahtloses Rücktransportgerät nach einem der Ansprüche 5 bis 7, wobei das Netzzugangsschichtprotokoll, das der Netzzugangstechnologie entspricht, die von dem ersten drahtlosen Rücktransportgerät unterstützt wird, das Gleiche ist wie ein Netzzugangsschichtprotokoll, das einer Netzzugangstechnologie entspricht, die von dem zweiten drahtlosen Rücktransportgerät unterstützt wird.

## Revendications

1. Procédé de transmission d'interface radio, comportant les étapes consistant à :
faire recevoir (401b), par un premier dispositif de raccordement sans fil, des données de trames Ethernet ;
faire encapsuler (404b), par le premier dispositif de raccordement sans fil, les données de trames Ethernet en utilisant un protocole de couche d'accès radio correspondant à une technologie d'accès radio prise en charge par le premier dispositif de raccordement sans fil, pour obtenir des données encapsulées de trames Ethernet ; et
faire envoyer, par le premier dispositif de raccordement sans fil, les données encapsulées de trames Ethernet à un deuxième dispositif de raccordement sans fil via une interface radio sans fil
**caractérisé en ce que**
le procédé comporte en outre, avant l'encapsulation, par le premier dispositif de raccordement sans fil, des données de trames Ethernet en utilisant un protocole de couche d'accès radio correspondant à une technologie d'accès radio prise en charge par le premier dispositif de raccordement sans fil, pour obtenir des données encapsulées de trames Ethernet, les étapes consistant à :
faire analyser (402b), par le premier dispositif de raccordement sans fil, les données de trames Ethernet, pour obtenir un identifiant de mappage ; et
faire interroger (403b), par le premier dispositif de raccordement sans fil d'après l'identifiant de mappage, un modèle de flux de trafic pour déterminer une ressource de support radio d'un identifiant spécifié de classe de qualité de service, QoS, qui correspond à l'identifiant de mappage ; et
l'envoi, par le premier dispositif de raccordement sans fil, des données encapsulées de trames Ethernet à un deuxième dispositif de raccordement sans fil via une interface radio sans fil comporte l'étape consistant à :
faire envoyer (405b), par le premier dispositif de raccordement sans fil, les données encapsulées de trames Ethernet au deuxième dispositif de raccordement sans fil via l'interface radio sans fil en utilisant la ressource de support radio de l'identifiant spécifié de classe de QoS qui correspond à l'identifiant de mappage.

2. Procédé selon la revendication 1, l'interrogation (403b), par le premier dispositif de raccordement sans fil d'après l'identifiant de mappage, d'un modèle de flux de trafic pour déterminer une ressource de support radio d'un identifiant spécifié de classe de QoS qui correspond à l'identifiant de mappage comportant l'étape consistant à : faire interroger, par le premier dispositif de raccordement sans fil d'après l'identifiant de mappage, la correspondance entre un identifiant de mappage lié à un modèle de flux de trafic et une ressource de support radio d'un identifiant spécifié de classe de QoS pour déterminer la ressource de support radio de l'identifiant spécifié de classe de QoS qui correspond à l'identifiant de mappage.

3. Procédé selon la revendication 2, le procédé comportant en outre, avant l'envoi, par le premier dispositif de raccordement sans fil, des données encapsulées de trames Ethernet au deuxième dispositif de raccordement sans fil via l'interface radio sans fil en utilisant la ressource de support radio de l'identifiant spécifié de classe de QoS qui correspond à l'identifiant de mappage, l'étape consistant à :
faire effectuer, par le premier dispositif de raccordement sans fil, un traitement de compression d'en-tête sur les données encapsulées de trames Ethernet.

4. Procédé selon l'une quelconque des revendications 1 à 3,
le protocole de couche d'accès radio correspondant à la technologie d'accès radio prise en charge par le premier dispositif de raccordement sans fil étant le même qu'un protocole de couche d'accès radio correspondant à une technologie d'accès radio prise en charge par le deuxième dispositif de raccordement sans fil.

5. Dispositif de raccordement sans fil, faisant fonction de premier dispositif de raccordement sans fil, comportant :
une unité (801) de réception, configurée pour recevoir des données de trames Ethernet ;
un unité (802) d'encapsulation, configurée pour encapsuler les données de trames Ethernet en utilisant un protocole de couche d'accès radio correspondant à une technologie d'accès radio prise en charge par le premier dispositif de raccordement sans fil, pour obtenir des données encapsulées de trames Ethernet ; et
une unité (803) d'émission, configurée pour envoyer les données encapsulées de trames Ethernet à un deuxième dispositif de raccordement sans fil via une interface radio sans fil
**caractérisé par**
une unité (804) d'analyse, configurée pour analyser les données de trames Ethernet, afin d'obtenir un identifiant de mappage ; et
une unité (805) d'interrogation, configurée pour interroger, d'après l'identifiant de mappage, un modèle de flux de trafic afin de déterminer une ressource de support radio d'un identifiant spécifié de classe de QoS qui correspond à l'identifiant de mappage, et
l'unité (803) d'émission étant configurée pour envoyer les données encapsulées de trames Ethernet au deuxième dispositif de raccordement sans fil via l'interface radio sans fil en utilisant la ressource de support radio de l'identifiant spécifié de classe de QoS qui correspond à l'identifiant de mappage.

6. Dispositif de raccordement sans fil selon la revendication 5, l'unité (805) d'interrogation étant configurée pour interroger, d'après l'identifiant de mappage, la correspondance entre un identifiant de mappage lié à un modèle de flux de trafic et une ressource de support radio d'un identifiant spécifié de classe de QoS pour déterminer la ressource de support radio de l'identifiant spécifié de classe de QoS qui correspond à l'identifiant de mappage.

7. Dispositif de raccordement sans fil selon la revendication 6, comportant en outre : une unité (806) de compression d'en-tête, configurée pour effectuer un traitement de compression d'en-tête sur les données encapsulées de trames Ethernet obtenues par l'unité d'encapsulation, et délivrer les données encapsulées de trames Ethernet à l'unité d'émission.

8. Dispositif de raccordement sans fil selon l'une quelconque des revendications 5 à 7, le protocole de couche d'accès radio correspondant à la technologie d'accès radio prise en charge par le premier dispositif de raccordement sans fil étant le même qu'un protocole de couche d'accès radio correspondant à une technologie d'accès radio prise en charge par le deuxième dispositif de raccordement sans fil.
